# EUROPÄISCHE PATENTANMELDUNG

(11) **EP 0 846 411 A1**
(43) Veröffentlichungstag der Anmeldung: **10.06.1998**
(21) Anmeldenummer: 97120797.2
(22) Anmeldetag: 27.11.1997
(51) Int. Cl.: A01F 25/20

(54) **Landwirtschaftliches Fahrzeug für die Fütterung von Tieren mit Silage**

(30) Priorität: 06.12.1996 DE 19650617
(71) Anmelder: von der Heide Maschinenbau GmbH & Co. KG, 49479 Ibbenbüren 2 - Laggenbeck (DE)
(72) Erfinder: von der Heide, Hans, 49479 Laggenbeck (DE)
(74) Vertreter: Schulze Horn & Partner

(57) **Zusammenfassung**

Die Erfindung betrifft ein landwirtschaftliches Fahrzeug (1) für die Fütterung von Tieren mit Silage, mit einem Laderaum (14) mit Mitteln zum Aufbereiten und Fördern der Silage, mit einer an der einen Stirnseite des Fahrzeuges (1) vorgesehenen drehantreibbaren und höhenverfahrbaren Silagefräse (3), mit einer von der Silagefräse (3) zum Laderaum (14) führenden Silagerutsche (2) und mit einer an der von der Silagefräse (3) entfernten Stirnseite des Laderaums (14) angeordneten Futteraustrageinrichtung (16).

Das Fahrzeug gemäß Erindung ist dadurch gekennzeichnet,
- daß die Silagefräse (3) am laderaumfernen Ende der Silagerutsche (2) angeordnet und gehaltert ist,
- daß die Silagerutsche (2) an ihrem laderaumseitigen Ende um eine erste horizontale Schwenkachse (20) verschwenkbar an dem Fahrzeug (1) angelenkt und mittels eines Kraftantriebes (4) um diese Achse (20) verschwenkbar ist und
- daß die Silagerutsche (2) aus zwei gelenkig miteinander verbundenen Rutschenabschnitten (21, 22) gebildet ist, die um eine zweite, zur ersten parallele horizontale Schwenkachse (20') in einem begrenzten Winkelbereich relativ zueinander verschwenkbar sind.

## Beschreibung

Die vorliegende Erfindung betrifft ein landwirtschaftliches Fahrzeug für die Fütterung von Tieren mit Silage, mit einem Laderaum mit Mitteln zum Aufbereiten und Fördern der Silage, mit einer an der einen Stirnseite des Fahrzeuges vorgesehenen drehantreibbaren und höhenverfahrbaren Silagefräse, mit einer von der Silagefräse zum Laderaum führenden Silagerutsche und mit einer an der von der Silagefräse entfernten Stirnseite des Laderaums angeordneten Futteraustrageinrichtung.

Ein landwirtschaftliches Fahrzeug der genannten Art ist aus der DE 30 33 824 A1 bekannt. Bei diesem Fahrzeug ist zwischen der höhenverfahrbaren Silagefräse und dem Laderaum eine nach Maßgabe der Höhenverstellung der Silagefräse mit verschwenkbare, einteilige Ladeschurre angebracht. Das Verfahren der Silagefräse erfolgt dabei entlang eines vertikalen Rahmens, an dem ein die Silagefräse und die Silagerutsche halternder Schlitten durch geeignete Antriebsmittel vertikal verfahrbar ist.

Als nachteilig wird bei diesem bekannten Fahrzeug angesehen, daß für das Verfahren der Silagefräse ein hoher technischer Aufwand erforderlich ist, der die Herstellung und den Betrieb des Fahrzeuges verteuert und zu einem erhöhten Wartungs- und Reparaturaufwand führt.

Außerdem tragen der Rahmen mit dem Schlitten sowie die zugehörigen Antriebsmittel zu einem unerwünscht hohen Gewicht des Fahrzeuges bei. Schließlich ist noch als Nachteil zu erwähnen, daß der Rahmen für die Führung des Schlittens eine über das übrige Fahrzeug relativ weit hinausragende Höhe aufweist, die auch nicht verminderbar ist, wenn das Fahrzeug nicht für Fräsarbeiten an der Silge eingesetzt ist. Dies erschwert den Einsatz des Fahrzeuges insbesondere bei beengten Platzverhältnissen mit niedrigen Durchfahrts- und Stallhöhen.

Für die vorliegende Erfindung stellt sich deshalb die Aufgabe, ein Fahrzeug der eingangs genannten Art zu schaffen, das die aufgeführten Nachteile vermeidet und bei dem insbesondere eine vereinfachte Konstruktion bei gleichzeitig zuverlässiger Betriebsweise und kompakter Baugröße erreicht wird.

Die Lösung dieser Aufgabe gelingt erfindungsgemäß durch ein landwirtschaftliches Fahrzeug der eingangs genannten Art, das dadurch gekennzeichnet ist,
- daß die Silagefräse am laderaumfernen Ende der Silagerutsche angeordnet und gehaltert ist,
- daß die Silagerutsche an ihrem laderaumseitigen Ende um eine erste horizontale Schwenkachse verschwenkbar an dem Fahrzeug angelenkt und mittels eines Kraftantriebes um diese Achse verschwenkbar ist und
- daß die Silagerutsche aus zwei gelenkig miteinander verbundenen Rutschenabschnitten gebildet ist, die um eine zweite, zur ersten parallele horizontale Schwenkachse in einem begrenzten Winkelbereich relativ zueinander verschwenkbar sind.

Bei dem erfindungsgemäßen Fahrzeug wird durch die Anordnung und Halterung der Silagefräse am laderaumfernen Ende der Silagerutsche erreicht, daß keine besonderen Führungs- und Haltemittel für die Silagefräse mehr benötigt werden. Insbesondere platzraubende und zu einem hohen Gewicht beitragende Führungsrahmen und -schlitten oder eine verschwenkbare Trägeranordnung nach Art eines Frontladers sind bei dem neuen Fahrzeug nicht mehr erforderlich. Die Silagerutsche erhält somit eine doppelte Funktion, was die Konstruktion des Fahrzeuges vereinfacht. Durch die weiterhin vorgesehene Zweiteilung der Silagerutsche in zwei gelenkig miteinander verbundene Rutschenabschnitte wird die vorteilhafte Möglichkeit geschaffen, die Silagefräse in gewünschter Weise entlang der Schnittfläche eines Fahrsilos für einen Fräsvorgang von oben nach unten zu bewegen und durch gezielte Verstellung der beiden Rutschenabschnitte gegeneinander eine annähernd vertikale Fräsfläche zu erzielen, ohne daß das Fahrzeug selbst dabei verfahren werden muß. Außerdem ermöglicht die Verstellbarkeit der Rutschenabschnitte gegeneinander ein platzsparendes Unterbringen der Silagerutsche während der Einsatzzeiten des Fahrzeuges, in denen es nicht für Fräsarbeiten, sondern für den Transport und den Austrag der Silage in Stallungen eingesetzt wird. Damit wird auch eine vorteilhaft niedrige Bauhöhe ermöglicht, was den Einsatz des Fahrzeuges gemäß Erfindung auch in niedrigen Stallungen ermöglicht.

Bevorzugt ist vorgesehen, daß die beiden relativ zueinander verschwenkbaren Rutschenabschnitte in ihrer einen Verschwenkungs-Endstellung relativ zueinander einen fluchtenden geradlinigen Verlauf aufweisen und in ihrer anderen Verschwenkungs-Endstellung realtiv zueinander einen etwa rechten Winkel einschließen. In der ersten Verschwenkungs-Endstellung mit dem fluchtenden Verlauf der beiden Rutschenabschnitte wird eine maximale Reichweite der Silagefräse erreicht, womit auch relativ hohe Fahrsilos mit der Silagefräse bearbeitbar sind. In der anderen Verschwenkungs-Endstellung, in der die beiden Rutschenabschnitte einen etwa rechten Winkel einschließen, bilden die beiden Rutschenabschnitte die Form einer Ladeschaufel. In dieser Stellung kann Silage auch vom Boden aufgenommen werden, wobei die Fräse für eine Beförderung der Silage vom Boden auf den ersten Rutschenabschnitt sorgt. Durch anschließendes Verschwenken der beiden Rutschenabschnitte nach oben rutscht die Silage in den anschließenden Laderaum des Fahrzeuges. Beim Abfräsen von Silage aus dem Fahrsilo rutscht die abgefräste Silage entweder unmittelbar bis in den Laderaum, sofern im oberen Bereich eines Silos gefräst wird, oder sammelt sich zunächst auf der Silagerutsche, sofern in einem tieferen Bereich des Silos gefräst wird, wonach die Silage dann durch Verschwenken der Silagerutsche nach oben in den Laderaum befördert werden kann.

Zur Vereinfachung der Konstruktion und Betätigung des Fahrzeuges wird vorgeschlagen, daß der Kraftantrieb für die Verschwenkung der Silagerutsche insgesamt an dem laderaumseitigen Rutschenabschnitt angreift. Der Kraftantrieb kann auf diese Weise relativ kompakt ausgeführt werden, da seine Teile nur bis zum laderaumseitigen Rutschenabschnitt wirken müssen, nicht aber bis zu dem davon entfernten fräsenseitigen Rutschenabschnitt.

Die Verstellung der beiden Rutschenabschnitte relativ zueinander kann auf unterschiedliche Art und Weise erfolgen, wobei im einfachsten Fall die Verstellung manuell erfolgt mit anschließender Arretierung der beiden Rutschenabschnitte gegeneinander. Weiterhin wäre der Einsatz eines weiteren Kraftantriebes denkbar, was aber wegen des damit verbundenen konstruktiven Aufwandes unerwünscht ist. Bevorzugt schlägt deshalb die Erfindung vor, daß zwischen dem fräsenseitigen Rutschenabschnitt und dem Fahrzeug mindestens ein Zugelement mit festgelegter maximaler Länge angeordnet ist, wobei der Fixpunkt des Zugelementes am fräsenseitigen Rutschenabschnitt zwischen der Silagefräse und der zweiten Schwenkachse angeordnet ist und wobei der fahrzeugseitige Fixpunkt des Zugelementes in einer Höhe, die etwa der Hälfte der Verfahrhöhe der Silagefräse entspricht, und in einem horizontalen Abstand von der Silagefräse, der größer ist als der horizontale Abstand zwischen der Silagefräse und der ersten Schwenkachse, angeordnet ist. Durch diese Ausgestaltung des Fahrzeuges ergibt sich eine Zwangssteuerung des fräsenseitigen Rutschenabschnittes relativ zum laderaumseitigen Rutschenabschnitt in Abhängigkeit von der Verschwenkungsstellung des laderaumseitigen Rutschenabschnittes, die durch den Kraftantrieb bewirkt wird. Dabei erfolgt durch die angegebene Geometrie des Zugelementes die Zwangssteuerung so, daß bei einer Abwärtsbewegung der Silagefräse durch Betätigung des Kraftantriebes eine annähernd gerade vertikale Linie von der Silagefräse beschrieben wird, die lediglich im unteren Endbereich der Bewegung der Silagefräse in eine leichte konvexe Krümmung übergeht. Auf diese Weise wird eine saubere Anschnittfläche der Silage erreicht, die aufgrund ihres im wesentlichen vertikalen Verlaufs bei Niederschlägen praktisch kein Wasser aufnimmt, so daß auch im Bereich der Anschnittfläche eine hohe Silagequalität gewährleistet bleibt.

Bevorzugt ist das erwähnte Zugelement ein Seil, das auf eine in Aufwickelrichtung vorgespannte, den fahrzeugseitigen Fixpunkt bildende Seiltrommel aufwickelbar und von dieser durch die Gewichtskraft des fräsenseitigen Rutschenabschnittes und der Silagefräse abwickelbar ist. Die vorgespannte Seiltrommel sorgt dafür, daß bei beabsichtigter Verschwenkung des fräsenseitigen Rutschenabschnittes in Richtung zum Laderaum das nun entspannte Seil nicht schlaff durchhängt, sondern stets unter ausreichender Straffung einen geradlinigen Verlauf behält.

Hinsichtlich der Gestaltung der Rutschenabschnitte ist bevorzugt vorgesehen, daß diese im Querschnitt U-förmig und nach oben offen sind und daß in deren Verbindungsbereich miteinander der fräsenseitige Rutschenabschnitt in den fahrzeugseitigen Rutschenabschnitt eingreift und daß der laderaumseitige Rutschenabschnitt in seinem Verbindungsbereich mit dem Laderaum in diesen eingreift. Durch die beschriebene Form und die beschriebene Art des gegenseitigen Eingriffs wird sichergestellt, daß die abgefräste Silage stets ohne Hindernisse und Stauungen entlang der Silagerutsche in den Laderaum befördert werden kann. Außerdem werden auf diese Weise die zuvor beschriebenen relativen Bewegungen der Rutschenabschnitte relativ zueinander sowie der Silagerutsche insgesamt relativ zum übrigen Fahrzeug problemlos ermöglicht.

Hinsichtlich der Gestaltung der Rutschenabschnitte ist bevorzugt weiterhin vorgesehen, daß die U-Schenkel der Rutschenabschnitte einen horizontalen Abstand voneinander aufweisen, der wenig kleiner ist als die Laderaumbreite zwischen diesen begrenzenden Laderaum-Seitenwänden. Durch diese Ausgestaltung kann die Silagefräse eine Arbeitsbreite aufweisen, die nur wenig kleiner ist, als die Breite des Laderaumes, so daß ein wirkungsvolles und rasches Befüllen des Laderaumes beim Abfräsen von Silage gewährleistet ist. Außerdem wird so der Laderaum über seine gesamte Breite beim Abfräsen der Silage gefüllt, ohne daß hierfür besondere Mittel zur seitlichen Verteilung der abgefrästen Silage nötig wären.

Um beim Verfahren des Fahrzeuges nach Befüllen mit abgefräster Silage einen Silageverlust aus dem Laderaum zu vermeiden, wird vorgeschlagen, daß mittels des Kraftantriebes der laderaumseitige Rutschenabschnitt über die Silagefräsarbeitshöhe hinaus in eine etwa vertikal nach oben verlaufende Stellung, in der dieser Rutschenabschnitt einen stirnseitigen Laderaumabschluß bildet, verschwenkbar ist. Auf diese Weise kann der laderaumseitige Rutschenabschnitt als stirnseitige Laderaumwand genutzt werden, so daß eine separate Laderaumwand, die auch noch verstellbar sein müßte, eingespart werden kann.

In Weiterbildung der zuletzt beschriebenen Ausführung des Fahrzeuges ist vorgesehen, daß in der etwa vertikal nach oben verlaufenden Stellung des laderaumseitigen Rutschenabschnittes der fräsenseitige Rutschenabschnitt mit der Silagefräse in den oberen Teil des Laderaumes in eine etwa horizontale Stellung verschwenkbar ist, in der die offene Seite des fräsenseitigen Rutschenabschnittes nach unten weist. Hierdurch wird eine besonders platzsparende Unterbringung der Silagefräse und des fräsenseitigen Rutschenabschnittes für die Betriebszeiten des Fahrzeuges erreicht, in denen die Silagefräse nicht eingesetzt wird. Das Fahrzeug hat in dem beschriebenen verschwenkten Zustand des fräsenseitigen Rutschenabschnittes mit der Silagefräse äußere Abmessungen, die nur unwesentlich größer sind als die Abmessungen des Laderaumes, so daß ein Befahren auch von Stallungen mit niedrigen Deckenhöhen oder das Durchfahren von niedrigen Toren möglich ist. Hierdurch wird das Fahrzeug auch in solchen Anwendungsfällen einsetzbar, in denen bisher derartige Fahrzeuge aufgrund ihrer zu hohen oder zu langen Bauweise nicht verwendbar waren.

Um bei dem zuvor beschriebenen Verschwenken des fräsenseitigen Rutschenabschnittes mit der Silagefräse in den oberen Teil des Laderaumes Schäden an Teilen des Fahrzeuges auszuschließen, wird vorgeschlagen, daß zwischen den beiden Rutschenabschnitten eine deren Schwenkgeschwindigkeit relativ zueinander begrenzende Bremseinrichtung und/oder eine die Gewichtskraft der Silagefräse und des fräsenseitigen Rutschenabschnittes teilweise ausgleichende Kraftspeichereinrichtung vorgesehen ist/sind. Die Bremseinrichtung kann beispielsweise eine Reibungsbremse oder eine hydraulische Bremse mit einem Zylinder und einem darin geführten Bremskolben sein. Die Kraftspeichereinrichtung ist bevorzugt durch eine oder mehrere Gasdruckfedern gebildet, die den gewünschten Entlastungs- und gleichzeitig Bremseffekt bewirken. Wenn eine besonders einfache Ausführung des Fahrzeuges gewünscht ist, kann auf eine solche Bremseinrichtung oder Kraftspeichereinrichtung auch gänzlich verzichtet werden; in diesem Falle sind dann lediglich Mittel zur Arretierung der beiden Rutschenabschnitte relativ zueinander in ihrer zweiten Verschwenkungs-Endstellung zweckmäßig, die dann dafür sorgen, daß schon vor dem Verschwenken der Silagerutsche insgesamt im abgewinkelten Zustand keine Relativbewegung der beiden Rutschenabschnitte gegeneinander mehr möglich ist, wenn die Silagefräse nicht benötigt wird und in ihre Ruhestellung im oberen Teil des Laderaumes verschwenkt werden soll.

Ein Ausführungsbeispiel des erfindungsgemäßen landwirtschaftlichen Fahrzeuges wird im folgenden anhand einer Zeichnung erläutert. Die Figuren der Zeichnung zeigen:
- Figur 1: ein Fahrzeug mit einer Silagefräse und einer Silagerutsche in Seitenansicht in einem ersten Betriebszustand,
- Figur 2: das Fahrzeug aus Figur 1 in einem zweiten Betriebszustand in einer Teil-Seitenansicht,
- Figur 3: das Fahrzeug aus Figur 1 in einem dritten Betriebszustand, ebenfalls in einer Teil-Seitenansicht und
- Figur 4: das Fahrzeug aus Figur 1 in einem vierten Betriebszustand, wieder in einer Teil-Seitenansicht.

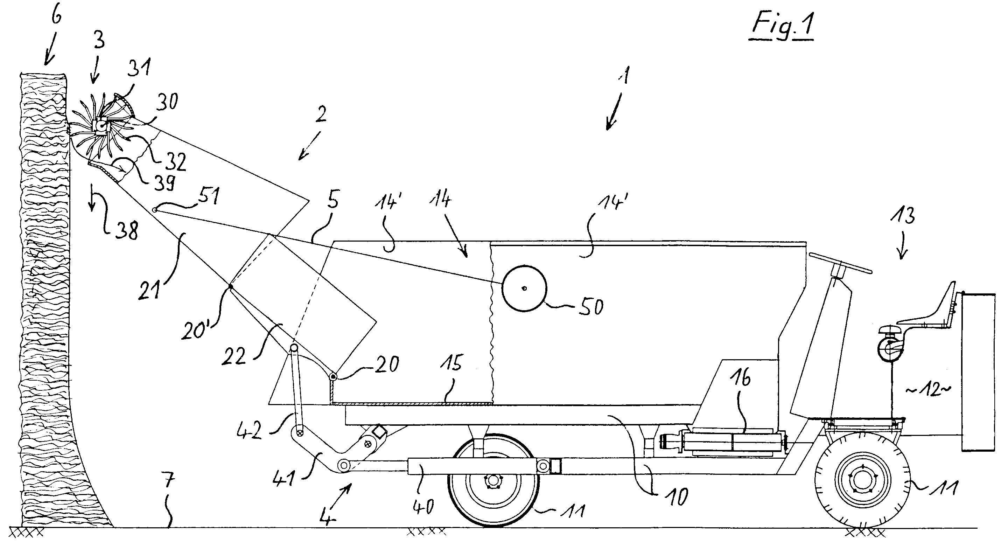

Wie die Figur 1 der Zeichnung zeigt, besteht das dargestellte Ausführungsbeispiel des landwirtschaftlichen Fahrzeuges 1 aus einem tragenden Rahmen 10 mit Rädern 11 und einer Antriebseinheit 12, die z.B. durch eine Brennkraftmaschine gebildet ist. Im hinteren, d.h. in der Zeichnung rechten Teil des Fahrzeuges 1 ist ein Fahrzeugführerstand 13 vorgesehen; den davor, d.h. in der Zeichnung links davon liegenden Teil des Fahrzeuges 1 nimmt ein Laderaum 14 ein, der durch Laderaumseitenwände 14' zu den Seiten hin und durch einen Laderaumboden 15 nach unten hin begrenzt ist. Unterhalb des führerstandsseitigen Endes des Laderaumes 14 ist eine Futteraustrageinrichtung 16 in Form eines Querförderbandes vorgesehen, durch welches aufbereitete Silage, gegebenenfalls mit eingemischten weiteren Futterbestandteilen, seitlich nach links oder nach rechts in einen Futtertrog oder Stallgang austragbar ist. Im Inneren des Laderaumes 14 sind an sich bekannte und deshalb hier nicht dargestellte Mittel zum Fördern und Zerkleinern oder sonstigen Aufbereiten von Silage sowie gegebenenfalls zum Zumischen von weiteren Futtermitteln vorgesehen.

Der Laderaum 14 ist nach oben hin zumindest in seinem vorderen, d.h. in der Zeichnung linken Teil sowie an seiner vorderen Stirnseite offen.

An der vorderen Stirnseite, d.h. in der Zeichnung links, ist an dem Fahrzeug 1 eine Silagerutsche 2 angelenkt, die ihrerseits am freien Ende eine Silagefräse 3 trägt. Die Silagerutsche 2 ist zweiteilig ausgeführt mit einem ersten, fräsenseitigen Rutschenabschnitt 21 und einem zweiten, laderaumseitigen Rutschenabschnitt 22. Der laderaumseitige Rutschenabschnitt 22 ist mittels einer ersten Schwenkachse 20, die horizontal und quer zur Fahrzeuglängsachse verläuft, verschwenkbar mit dem Fahrzeug 1 verbunden. Diese erste Schwenkachse 20 liegt dabei am vorderen, d.h. in der Zeichnung linken Ende des Laderaumes 14 etwas oberhalb des Laderaumbodens 15.

Die beiden Rutschenabschnitte 21, 22 sind mittels einer zweiten Schwenkachse 20', die parallel zur ersten Schwenkachse 20 verläuft, gelenkig miteinander verbunden. Die Verbindung der beiden Rutschenabschnitte 21, 22 ist dabei so ausgeführt, daß eine begrenzte Verschwenkung relativ zueinander ermöglicht wird. In der Figur 1 der Zeichnung nehmen die beiden Rutschenabschnitte 21, 22 die eine Verschwenkungs-Endstellung relativ zueinander ein, in der die Silagerutsche 2 einen geradlinigen Verlauf aufweist, bei dem die Rutschenabschnitte 21, 22 miteinander fluchten. Dabei verläuft die Silagerutsche 2 von der Silagefräse 3 abwärts zum Inneren des Laderaumes 14. Aus dieser in Figur 1 gezeigten Verschwenkungs-Endstellung der Rutschenabschnitte 21, 22 kann der fräsenseitige Rutschenabschnitt 21 relativ zum laderaumseitigen Rutschenabschnitt 22 nur nach oben, d.h. im Uhrzeigersinn verschwenkt werden. Eine Verschwenkung in die andere Richtung über den gezeigten Zustand gemäß Figur 1 hinaus ist durch geeignete Begrenzungsmittel, die hier nicht im einzelnen dargestellt sind, unterbunden.

Die Silagefräse 3 besteht im gezeigten Ausführungsbeispiel aus einer zentralen Welle 31, die um eine horizontale Drehachse 30 drehantreibbar ist. Diese Drehachse 30 verläuft parallel zu den Schwenkachsen 20, 20'. Die Mittel für den Drehantrieb der Silagefräse 3 sind hier nicht dargestellt; sie liegen im Hintergrund auf der nicht sichtbaren Seite der Silagefräse 3 bzw. an dem unmittelbar benachbarten fräsenseitigen Ende des fräsenseitigen Rutschenabschnittes 21. Mit der zentralen Welle 31 sind mehrere Fräszinken 32 verbunden, die mit ihren Spitzen während des Fräsvorganges in einen im linken Rand der Figur 1 teilweise dargestellten Silo 6 eingreifen. Durch Drehung der Silagefräse 3 entgegen dem Uhrzeigersinn wird Silage aus dem Silo 6 im Sinne des Pfeiles 39 auf die Silagerutsche 2 befördert, von wo sie unter Schwerkraftwirkung in den Laderaum 14 rutscht.

Gleichzeitig wird die gesamte Silagerutsche 2 zusammen mit der Silagefräse 3 in Richtung des Bewegungspfeiles 38 abgesenkt, wobei die Silagefräse 3 nach und nach die gesamte Anschnittfläche des Silos 6 von oben nach unten überstreicht.

Für die Verschwenkung der Silagerutsche 2 mit der Silagefräse 3 ist ein Kraftantrieb 4 vorgesehen. Dieser Kraftantrieb 4 besteht hier aus einer Kolben-Zylinder-Einheit 40, die unterhalb des Laderaumbodens 15 parallel zu diesem in Fahrzeuglängsrichtung angeordnet ist. Die Kolbenstange der Kolben-Zylinder-Einheit 40 ist mit einem Winkelhebel 41 verbunden, dessen eines Ende gelenkig mit dem Rahmen 10 des Fahrzeuges 1 verbunden ist. Das andere Ende des Winkelhebels 41 ist mit einer Schubstange 42 gelenkig verbunden, deren anderes Ende wiederum unterseitig gelenkig mit dem laderaumseitigen Rutschenabschnitt 22 verbunden ist. Durch Ausfahren der Kolbenstange der Kolben-Zylinder-Einheit 40 wird der laderaumseitige Rutschenabschnitt 22 und damit die Silagerutsche 2 insgesamt nach oben bewegt; umgekehrt wird durch Einfahren der Kolbenstange der Kolben-Zylinder-Einheit 40 die Silagerutsche 2 insgesamt abgesenkt, wobei sie um die Schwenkachse 20 nach unten verschwenkt wird. Die Betätigung der Kolben-Zylinder-Einheit erfolgt vom Fahrzeugführerstand 13 aus mittels Zu- oder Abführung von Hydraulikflüssigkeit.

Schließlich umfaßt das Fahrzeug 1 noch ein Zugelement 5, das hier durch ein Seil gebildet ist. Das Zugelement 5 verläuft vom fräsenseitigen Rutschenabschnitt 21 zur dem Betrachter zugewandten Seitenwand 14' des Laderaumes 14. Zweckmäßig ist eine identische Anordnung eines weiteren Zugelementes 5 auf der dem Betrachter abgewandten Seite des Fahrzeuges 1 vorgesehen.

An dem fräsenseitigen Rutschenabschnitt 21 ist das Zugelement 5 mittels eines Fixpunktes 51 festgelegt, wobei der Fixpunkt 51 etwa mittig zwischen der Silagefräse 3 und der zweiten Schwenkachse 20' an dem Rutschenabschnitt 21 angeordnet ist. Das entgegengesetzte Ende des Zugelementes 5 läuft auf eine Seiltrommel 50, die durch eine geeignete Einrichtung, z.B. eine Spiralfeder, in Aufwickelrichtung vorgespannt ist. Das Zugelement 5 hat eine vorgegebene maximale Länge, die in dem Betriebszustand des Fahrzeuges 1 gemäß Figur 1 vollständig von der Trommel 50 abgewickelt ist. Die Trommel 50 ist dabei so an der Laderaumseitenwand 14' angeordnet, daß sie relativ zur Erdoberfläche 7 in einer Höhe liegt, die etwa der Hälfte der maximalen Silagefräsarbeitshöhe entspricht. In Fahrzeuglängsrichtung gesehen ist die Trommel 50 in einem Abstand von der Silagefräse 3 angeordnet, der größer ist als der Abstand der ersten Schwenkachse 20 von der Silagefräse 3.

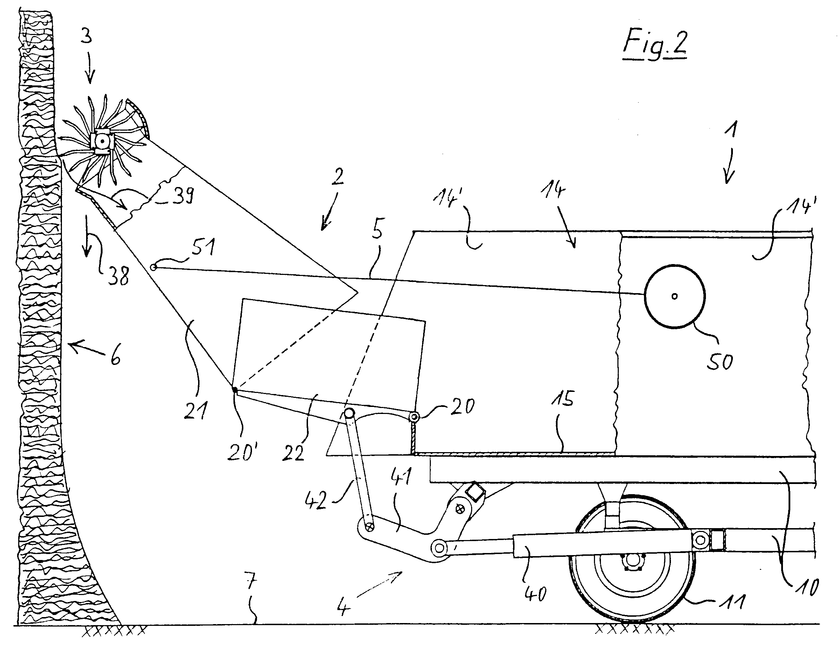

Die Wirkung des Zugelementes 5 wird anhand von Figur 2 besonders deutlich, die das Fahrzeug 1 in einem Betriebszustand mit bereits teilweise nach unten bewegter Silagefräse 3 zeigt. In diesem Betriebszustand ist die Kolbenstange der Kolben-Zylinder-Einheit 40 gegenüber dem Zustand in Figur 1 ein Stück weit eingefahren, wodurch eine Verschwenkung des laderaumseitigen Rutschenabschnittes 22 nach unten bewirkt wurde. Durch das Zugelement 5 und dessen festgelegte Länge wird dabei der fräsenseitige Rutschenabschnitt 21 relativ zum laderaumseitigen Rutschenabschnitt 22 im Uhrzeigersinn verschwenkt, wie die Figur 2 verdeutlicht. Je weiter durch Einfahren der Kolbenstange der Kolben-Zylinder-Einheit 40 der laderaumseitige Rutschenabschnitt 22 nach unten verschwenkt wird, desto weiter wird mittels des Zugelementes 5 der fräsenseitige Rutschenabschnitt 21 relativ zum laderaumseitigen Rutschenabschnitt 22 im Uhrzeigersinn verschwenkt. Diese überlagerten Schwenkbewegungen ergeben eine Bewegung der Silagefräse auf einer annähernd geraden vertikalen Linie nach unten im Sinne des Bewegungspfeiles 38. Bei dieser Abwärtsbewegung der Silagefräse 3 wird weiterhin Silage aus dem Silo 6 im Sinne des Pfeiles 39 über die Silagerutsche 2 in das Innere des Laderaumes 14 befördert.

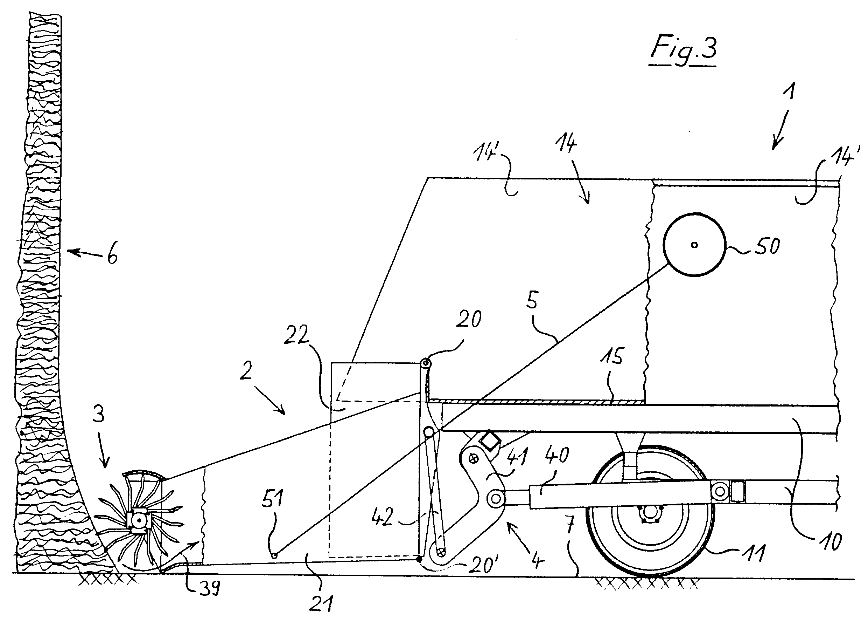

Figur 3 der Zeichnung zeigt das Fahrzeug 1 in seinem Betriebszustand am Ende des Fräsvorganges. In diesem Zustand nimmt der laderaumseitige Rutschenabschnitt 22 einen annähernd vertikalen nach unten weisenden Verlauf ein, wobei jetzt die Kolbenstange der Kolben-Zylinder-Einheit 40 vollständig in den Zylinder eingefahren ist. Durch die von dem Zugelement 5 auf den fräsenseitigen Rutschenabschnitt 21 ausgeübte Zugkraft ist dieser nun relativ zum laderaumseitigen Rutschenabschnitt 22 um die zweite Schwenkachse 20' so weit verschwenkt, daß die beiden Rutschenabschnitte 21, 22 einen etwa rechten Winkel einschließen. Auch in dieser Stellung der Silagerutsche 2 fördert die Silagefräse 3 Silage aus dem unteren Endbereich des Silos 6 im Sinne des Pfeiles 39 zunächst auf den fräsenseitigen Rutschenabschnitt 21. In dieser Stellung der Silagerutsche 2 kann auch lose, zuvor vom Silo 6 nach unten gefallene Silage oder ein sonstiges Futtermittel aufgenommen werden. Zur Beförderung der zunächst auf dem fräsenseitigen Rutschenabschnitt 21 gesammelten Silage wird die Silagerutsche 2, ohne daß die Silagefräse 3 jetzt noch zum Einsatz kommt, wieder nach oben verschwenkt, bis unter Schwerkraftwirkung die Silage vom fräsenseitigen Rutschenabschnitt 21 über den laderaumseitigen Rutschenabschnitt 22 in den Laderaum 14 rutscht.

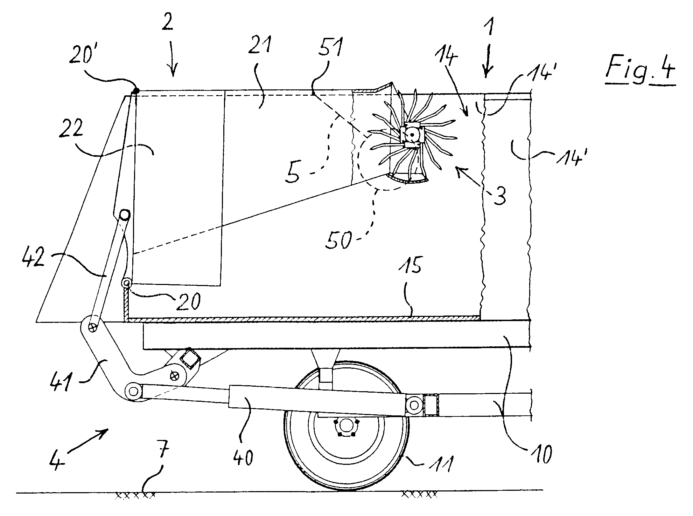

Figur 4 der Zeichnung zeigt das Fahrzeug 1 in einem Betriebszustand, den es bevorzugt während des Verfahrens einnimmt, um beispielsweise Silage von einem Silo in eine entfernt davon liegende Stallung zu transportieren.

In diesem Betriebszustand ist durch maximales Ausfahren der Kolbenstange der Kolben-Zylinder-Einheit 40 der laderaumseitige Rutschenabschnitt 22 in eine im wesentlichen vertikal nach oben verlaufende Stellung verschwenkt. In dieser Stellung bildet der laderaumseitige Rutschenabschnitt 22 einen stirnseitigen Abschluß des Laderaumes 14, der Verluste von Silage während des Verfahrens des Fahrzeuges 1 vermeidet.

Der fräsenseitige Rutschenabschnitt 21 ist um die Schwenkachse 20' relativ zum laderaumseitigen Rutschenabschnitt 22 in die zweite Verschwenkungs-Endstellung verschwenkt, so daß nun die offene Seite des fräsenseitigen Rutschenabschnittes 21, der im Querschnitt ebenso wie der laderaumseitige Rutschenabschnitt 22 U-förmig ausgebildet ist, nach unten weist. Die beiden Rutschenabschnitte 21, 22 sowie die Silagefräse 3 liegen dabei im oberen Teil des Laderaumes 14 des Fahrzeuges 1, wobei sie nach oben hin praktisch nicht mehr nennenswert über die Laderaumseitenwände 14' hinausragen. Auch nach vorne hin, d.h. in der Figur 4 nach links hin liegt keinerlei Überstand der Silagerutsche 2 oder der Silagefräse 2 mehr vor.

In gestrichelten Linien sind das in der Figur 4 nicht sichtbare Zugelement 5 und die zugehörige Seiltrommel 50 dargestellt, die auf der dem Betrachter abgewandten Außenseite der hinteren Laderaumseitenwand 14' liegen. Hier wird besonders deutlich, daß das Zugelement 5 nun zum größten Teil auf die Trommel 50 aufgewickelt ist und nur noch eine relativ geringe Länge aufweist, dabei aber durch die vorgegebene Aufwickelkraft der Seiltrommel 50 straff gehalten wird.

Um bei der Überführung der Silagerutsche 2 mit der Silagefräse 3 aus der Stellung gemäß Figur 3 in die Stellung gemäß Figur 4 eine zwischenzeitliche Streckung der Silagerutsche 2 in ihren geradlinigen Verlauf, wie in Figur 1 gezeigt, zu vermeiden, können zwischen den beiden Rutschenabschnitten 21, 22 hier nicht dargestellte Arretierungsmittel vorgesehen sein. Alternativ ist zwischen den beiden Rutschenabschnitten 21, 22 eine Bremseinrichtung oder eine Kraftspeichereinrichtung vorgesehen, die dafür sorgt, daß das Einschwenken der Silagerutsche 2 in den oberen Teil des Laderaumes 14 so langsam erfolgt, daß Schäden an Teilen des Fahrzeuges 1 nicht entstehen können.

## Patentansprüche

1. Landwirtschaftliches Fahrzeug (1) für die Fütterung von Tieren mit Silage, mit einem Laderaum (14) mit Mitteln zum Aufbereiten und Fördern der Silage, mit einer an der einen Stirnseite des Fahrzeuges (1) vorgesehenen drehantreibbaren und höhenverfahrbaren Silagefräse (3), mit einer von der Silagefräse (3) zum Laderaum (14) führenden Silagerutsche (2) und mit einer an der von der Silagefräse (3) entfernten Stirnseite des Laderaums (14) angeordneten Futteraustrageinrichtung (16),
**dadurch gekennzeichnet**,
- daß die Silagefräse (3) am laderaumfernen Ende der Silagerutsche (2) angeordnet und gehaltert ist,
- daß die Silagerutsche (2) an ihrem laderaumseitigen Ende um eine erste horizontale Schwenkachse (20) verschwenkbar an dem Fahrzeug (1) angelenkt und mittels eines Kraftantriebes (4) um diese Achse (20) verschwenkbar ist und
- daß die Silagerutsche (2) aus zwei gelenkig miteinander verbundenen Rutschenabschnitten (21, 22) gebildet ist, die um eine zweite, zur ersten parallele horizontale Schwenkachse (20') in einem begrenzten Winkelbereich relativ zueinander verschwenkbar sind.

2. Fahrzeug nach Anspruch 1, dadurch gekennzeichnet, daß die beiden relativ zueinander verschwenkbaren Rutschenabschnitte (21, 22) in ihrer einen Verschwenkungs-Endstellung relativ zueinander einen fluchtenden geradlinigen Verlauf aufweisen und in ihrer anderen Verschwenkungs-Endstellung relativ zueinander einen etwa rechten Winkel einschließen.

3. Fahrzeug nach Anspruch 1 oder 2, dadurch gekennzeichnet, daß der Kraftantrieb (4) für die Verschwenkung der Silagerutsche (2) insgesamt an dem laderaumseitigen Rutschenabschnitt (22) angreift.

4. Fahrzeug nach Anspruch 3, dadurch gekennzeichnet, daß zwischen dem fräsenseitigen Rutschenabschnitt (21) und dem Fahrzeug (1) mindestens ein Zugelement (5) mit festgelegter maximaler Länge angeordnet ist, wobei der Fixpunkt (51) des Zugelementes (5) am fräsenseitigen Rutschenabschnitt (21) zwischen der Silagefräse (3) und der zweiten Schwenkachse (20') angeordnet ist und wobei der fahrzeugseitige Fixpunkt (50) des Zugelementes (5) in einer Höhe, die etwa der Hälfte der Verfahrhöhe der Silagefräse (3) entspricht, und in einem horizontalen Abstand von der Silagefräse (3), der größer ist als der horizontale Abstand zwischen der Silagefräse (3) und der ersten Schwenkachse (20), angeordnet ist.

5. Fahrzeug nach Anspruch 4, dadurch gekennzeichnet, daß das Zugelement (5) ein Seil ist, das auf eine in Aufwickelrichtung vorgespannte, den fahrzeugseitigen Fixpunkt (50) bildende Seiltrommel aufwickelbar und von dieser durch die Gewichtskraft des fräsenseitigen Rutschenabschnittes (21) und der Silagefräse (3) abwickelbar ist.

6. Fahrzeug nach einem der vorangehenden Ansprüche, dadurch gekennzeichnet, daß die Rutschenabschnitte (21, 22) im Querschnitt U-förmig und nach oben offen sind und daß in deren Verbindungsbereich miteinander der fräsenseitige Rutschenabschnitt (21) in den fahrzeugseitigen Rutschenabschnitt (22) eingreift und daß der laderaumseitige Rutschenabschnitt (22) in seinem Verbindungsbereich mit dem Laderaum (14) in diesen eingreift.

7. Fahrzeug nach Anspruch 6, dadurch gekennzeichnet, daß die U-Schenkel der Rutschenabschnitte (21, 22) einen horizontalen Abstand voneinander aufweisen, der wenig kleiner ist als die Laderaumbreite zwischen diesen begrenzenden Laderaum-Seitenwänden (14').

8. Fahrzeug nach Anspruch 7, dadurch gekennzeichnet, daß mittels des Kraftantriebes (4) der laderaumseitige Rutschenabschnitt (22) über die Silagefräsarbeitshöhe hinaus in eine etwa vertikal nach oben verlaufende Stellung, in der dieser Rutschenabschnitt (22) einen stirnseitigen Laderaumabschluß bildet, verschwenkbar ist.

9. Fahrzeug nach Anspruch 8, dadurch gekennzeichnet, daß in der etwa vertikal nach oben verlaufenden Stellung des laderaumseitigen Rutschenabschnittes (22) der fräsenseitige Rutschenabschnitt (21) mit der Silagefräse (3) in den oberen Teil des Laderaumes (14) in eine etwa horizontale Stellung verschwenkbar ist, in der die offene Seite des fräsenseitigen Rutschenabschnittes (21) nach unten weist.

10. Fahrzeug nach Anspruch 9, dadurch gekennzeichnet, daß zwischen den beiden Rutschenabschnitten (21, 22) eine deren Schwenkgeschwindigkeit relativ zueinander begrenzende Bremseinrichtung und/oder eine die Gewichtskraft der Silagefräse (3) und des fräsenseitigen Rutschenabschnittes (21) teilweise ausgleichende Kraftspeichereinrichtung vorgesehen ist/sind.
